(19) Europäisches Patentamt

European Patent Office

Office européen des brevets

(11) **EP 0 844 730 A2**

(12) **EUROPÄISCHE PATENTANMELDUNG**

(43) Veröffentlichungstag:
27.05.1998 Patentblatt 1998/22

(51) Int. Cl.⁶: **H02P 7/00**

(21) Anmeldenummer: 97120018.3

(22) Anmeldetag: 14.11.1997

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: 25.11.1996 DE 29620516 U

(71) Anmelder:
**SIEMENS AKTIENGESELLSCHAFT**
**80333 München (DE)**

(72) Erfinder:
• **Ludwig, Heinz, Dipl.-Ing.**
**30823 Garbsen (DE)**
• **Sonntag, Guido, Dipl.-Ing.**
**30989 Gehrden (DE)**

(54) **Elektromechanischer Antrieb**

(57)    Elektromechanischer Antrieb mit einem Motor (3) und einem Steuergerät (2), mittels dem der Motor (3) steuer- und regelbar ist, wobei das Steuergerät (2) als für unterschiedliche Bautypen des Motors (3) geeignetes Universal-Steuergerät (2) ausgebildet ist, in dem auf die unterschiedlichen Bautypen des Motors (3) bezogene Motorkenndaten abgespeichert sind, und daß der elektromechanische Antrieb (1) eine Motorerkennung (Rx) aufweist, mittels der der Bautyp des Motors (3) des elektromechanischen Antriebs (1) identifizierten Bautyp des Motors (3) die auf diesen Bautyp bezogenen abgespeicherten Motorkenndaten zugeordnet werden können.

Fig 1

EP 0 844 730 A2

Beschreibung

Die Erfindung bezieht sich auf einen elektromechanischen Antrieb mit einem Motor und einem Steuergerät, mittels dem der Motor steuer- und regelbar ist.

Derartige elektromechanische Antriebe kommen insbesondere als Kleinantriebe häufig zum Einsatz, z.B. beim Antrieb von automatisch offen- und schließbaren Aufzugtüren, Schotten ud.dgl.

Der vorliegenden Erfindung liegt die Aufgabe zugrunde, einen elektromechanischen Antrieb der eingangs geschilderten Art zur Verfügung zu stellen, der bei ansonsten vergleichbaren Einsatzbedingungen hinsichtlich seiner Funktionalität und Anwendungsbreite mit einem wesentlich geringeren technischen und wirtschaftlichen Aufwand herstellbar ist.

Zur Lösung dieser Aufgabe wird zunächst vorgeschlagen, das Steuergerät als für unterschiedliche Bautypen des Motors geeignetes Universal-Steuergerat auszubilden. Dieses Universal-Steuergerät kann hinsichtlich seiner Hardware-Bestandteile einheitlich gestaltet sein, unabhängig von den Bautypen der mit ihm zu einem elektromechanischen Antrieb zusammengefaßten Motoren. Die Anpassung des einheitlichen Universal-Steuergeräts an unterschiedliche Bautypen von Motoren kann in geeigneter Weise softwaremäßig erfolgen.

Zur Anpassung des erfindungsgemäß ausgestalteten Universal-Steuergeräts an unterschiedliche Motoren hat es sich als besonders günstig erwiesen, wenn in dem Universal-Steuergerät auf die unterschiedlichen Bautypen des Motors bezogene Motorkenndaten abgespeichert sind, wobei der elektromechanische Antrieb keine Motorerkennung aufweist, mittels der der Bautyp des Motors des elektromechanischen Antriebs identifizierbar ist, so daß im Universal-Steuergerät dem identifizierten Bautyp des Motors die auf diesen Bautyp bezogenen abgespeicherten Motorkenndaten zugeordnet werden können. Sobald der Motor und das Universal-Steuergerät zu dem elektromechanischen Antrieb zusammengefügt sind, wird seitens der Motorerkennung der Bautyp des Motors erfaßt und werden im Universal-Steuergerät die auf diesen Bautyp bezogenen Daten zur Grundlage der Steuerung bzw. Regelung des Motors gemacht. Dieser Vorgang kann mit vergleichsweise einfachen Mitteln durchgeführt und ggf. automatisiert werden. Mittels eines einheitlichen Universal-Steuergeräts lassen sich somit Motoren unterschiedlichster Bauart zu elektromechanischen Antrieben zusammenstellen, wobei die Einstellung des Universal-Steuergeräts auf den jeweils für den elektromechanischen Antrieb eingesetzten Motor mit sehr geringem Aufwand erfolgen kann.

Die Motorerkennung des erfindungsgemäßen elektromechanischen Antriebs läßt sich in einfacher Weise realisieren, wenn zur Motorerkennung ein Festwiderstand gehört, der für jeden Bautyp des Motors eine unterschiedliche fest vorgegebene Größe aufweist. Die Motorerkennung kann dann die Größe dieses Festwiderstands erfassen und hiermit gleichzeitig den Bautyp des für diesen elektromechanischen Antrieb verwendeten Motors. Im Universal-Steuergerät wird dann auf die für diesen Baute abgespeicherten Motorkenndaten zugegriffen. Da derartige Festwiderstände in quasi beliebigen Festgrößen mit einem geringen konstruktiven Aufwand in großer Stückzahl hergestellt werden können, ist es erfindungsgemäß möglich, elektromechanische Antriebe mit einer großen Anzahl unterschiedlicher Motoren kostengünstig unter Verwendung des erfindungsgemäßen Universal-Steuergeräts herzustellen.

Zweckmäßigerweise ist der Festwiderstand der Motorerkennung in der Motorleitung angeordnet. So kann schon bei der Herstellung der unterschiedlichen Bautypen des Motors jeweils ein dem entsprechenden Bautyp entsprechender Festwiderstand dem Motor hinzugefügt werden.

Wenn das Universal-Steuergerät als Motorendstufe eine H-Brückenschaltung aufweist, die eine erste gemeinsam unterbrech- und schließbare Schaltergruppe und eine zweite gemeinsam unterbrech- und schließbare Schaltergruppe aufweist, die mittels einer zentralen Steuerungseinheit des Steuergeräts mit einem Tastverhältnis Tv = 50 % und einer Umschaltfrequenz zwischen den Schaltergruppen von größer 10 kHz wechselweise unterbrech- und schließ- bzw. schließ- und unterbrechbar sind, kann bei der bei der Zusammenfügung des elektromechanischen Antriebs bzw. danach erfolgenden Identifizierung des Bautyps des eingesetzten Motors in dessen Motorleitung, d.h. an dem in der Motorleitung angeordneten Festwiderstand, ein Spannungsniveau eingestellt werden, welches dem halben seitens der als H-Brückenschaltung ausgestalteten Motorendstufe zur Verfügung stellbaren Spannungsniveau entspricht, wobei der Motor bei dem genannten Tastverhältnis und dem genannten Bereich der Umschaltfrequenz stillsteht.

Zur einfachen Errechnung bzw. Erfassung der Höhe des Festwiderstands und damit zur Identifikation des Bautyps des Motors ist es vorteilhaft, wenn das Steuergerät zwischen dem Festwiderstand und dem entsprechenden eingangsseitigen Anschluß seiner zentralen Steuereinheit ein Zeitglied mit einem Widerstand und einem Kondensator aufweist, dessen Zeitkonstante Tk die durch die Umschaltfrequenz zwischen den Schaltergruppen H-Brückenschaltung vorgegebenen Unterbrech- bzw. Schließzeiten derselben bei weitem übersteigt. Ein in der zentralen Steuereinheit vorgesehener Microprozessor kann nun ohne weiteres an Hand des fest vorgegebenen Widerstands des Zeitglieds, der bekannten, seitens der Motorendstufe zur Verfügung stellbaren Spannung und der an der Eingangsseite des Steuergeräts anliegenden Spannung die Höhe des Festwiderstands errechnen.

Der Anschluß zwischen dem Motor und dem Universal-Steuergerät des zusammenzufügenden elektromechanischen Antriebs läßt sich in einfacher Weise mittels Steckern bewerkstelligen.

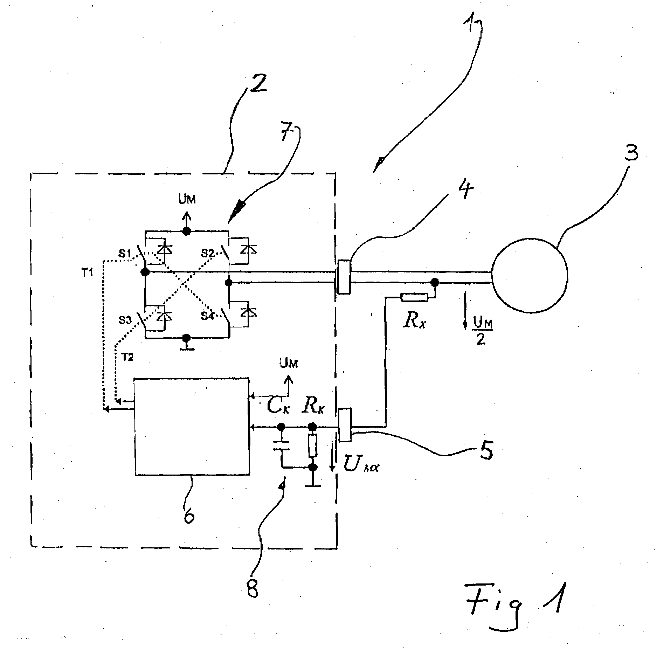

Im folgenden wird die Erfindung an Hand eines Ausführungsbeispiels unter Bezugnahme auf die Zeichnung näher erläutert, in der prinzipiell eine Ausführungsform des erfindungsgemäßen elektromechanischen Antriebs dargestellt ist.

Ein erfindungsgemäßer elektromechanischer Antrieb 1 besteht aus zwei Hauptkomponenten, nämlich einem hinsichtlich seiner Hardware einheitlichen Universal-Steuergerät 2 und einem Motor 3, der in unterschiedlichsten Bautypen mit dem hinsichtlich seiner Hardware einheitlichen Universal-Steuergerät 2 zu dem erfindungsgemäßen elektromechanischen Antrieb 1 zusammengefügt werden kann.

Das Zusammenfügen des Motors 3 und des Universal-Steuergeräts 2 erfolgt zweckmäßigerweise mittels Steckern 4, 5.

In der Motorzuleitung des Motors 3 ist ein Festwiderstand Rx angeordnet. Die Größe des Festwiderstands Rx entspricht dem Bautyp des Motors 3, d.h. für jeden Motor 3 ein und desselben Bautyps ist der Festwiderstand Rx gleich groß, wohingegen für einen Motor 3 eines anderen Bautyps ein Festwiderstand Rx mit einer anderen Größe vorgesehen ist. Der Festwiderstand Rx bildet einen wesentlichen Bestandteil der Motorerkennung des elektromechanischen Antriebs 1, und zwar den einzigen je nach Bautyp des Motors 3 variablen Bestandteil.

Das Universal-Steuergerät 2 hat eine zentrale Steuereinheit 6, die in üblicher Weise u.a. einen Microprozessor, eine Regelung und einen A/D-Wandler aufweist. Zum Universal-Steuergerät 2 gehört des weiteren eine Motorendstufe in Form einer H-Brückenschaltung 7, die mittels des Steckers 4 mit dem Motor 3 verbunden ist.

Die H-Brückenschaltung 7 weist eine erste Schaltergruppe S1, S4 auf, welche gemeinsam über eine erste Verbindungsleitung mittels der zentralen Steuereinheit 6 unterbrech- und schließbar ist. Entsprechend hat die H-Brückenschaltung eine zweite Schaltergruppe S2, S3, welche gemeinsam über eine zweite Verbindungsleitung durch die zentrale Steuereinheit 6 unterbrech- und schließbar ist.

Zwischen dem in der Motorleitung des Motors 3 angeordneten Festwiderstand Rx und dem Eingang der zentralen Steuereinheit 6 ist ein Zeitglied 8 vorgesehen, zu dem ein Widerstand Rk und ein Kondensator Ck gehört. Die Zeitkonstante Tk dieses Zeitglieds 8 ergibt sich aus den bekannten Größen des Kondensators Ck und des Widerstands Rk.

Des weiteren wird durch die zentrale Steuereinheit 6 das Niveau der Eingangsspannung UM der H-Brückenschaltung erfaßt.

Zur Identifizierung des Bautyps des Motors 3 wird nach dem Zusammenfügen des elektromechanischen Antriebs 1 das Tastverhältnis Tv bezüglich der beiden die zentrale Steuereinheit 6 mit der Schaltergruppe S1, S4 bzw. mit der Schaltergruppe S2, S3 der H-Brückenschaltung 7 verbindenden Verbindungsleitungen auf 50 % eingestellt. Die Umschaltfrequenz der Schaltergruppen S1, S4 und S2, S3 wird auf über 10 kHz gesetzt. Hierbei steht der Motor 3 still und der Effektivwert der Spannung am Festwiderstand Rx in der Motorleitung beträgt UM/2.

Vorausgesetzt, daß die Zeitkonstante Tk des Zeitglieds 8 sehr viel größer ist als die durch die Umschaltfrequenz zwischen den Schaltergruppen S1, S4 bzw. S2, S3 vorgegebenen Unterbrech- bzw. Schließzeiten T1, T2 derselben ist,

$$T_K = R_K {}^* C_K >> T1\_bzw.\_T2$$

ist nunmehr Microprozessor der zentralen Steuereinheit 6 in der Lage, aus dem Widerstand Rk, der Eingangsspannung UM der H-Brückenschaltung und der eingangsseitig des Steuergeräts 2 anliegenden Spannung UMX die Höhe des Festwiderstands Rx zu berechnen und damit den Bautyp des Motors 3 zu identifizieren. Nach dieser Identifizierung können diejenigen Motorkenndaten innerhalb der zentralen Steuereinheit 6 aufgegriffen werden, die für diesen Bautyp dort abgespeichert sind. Die Steuerung und Regelung des Motors 3 durch das Steuergerät 2 kann somit von Anfang an in optimaler Weise durchgeführt werden.

Die Errechnung der Höhe des Festwiderstands Rx in der Motorleitung des Motors 3 erfolgt unter Zugrundelegung der Gleichung

$$U_{MX} = \frac{U_M}{2 * \left( \dfrac{R_x}{R_K} + 1 \right)}$$

### Patentansprüche

1. Elektromechanischer Antrieb mit einem Motor (3) und einem Steuergerät (2), mittels dem der Motor (3) steuer- und regelbar ist, **dadurch gekennzeichnet,** daß das Steuergerät (2) als für unterschiedliche Bautypen des Motors (3) geeignetes Universal-Steuergerät (2) ausgebildet ist, in dem auf die unterschiedlichen Bautypen des Motors (3) bezogene Motorkenndaten abgespeichert sind, und daß der elektromechanische Antrieb (1) eine Motorerkennung (Rx) aufweist, mittels der der Bautyp des Motors (3) des elektromechanischen Antriebs (1) identifizierten Bautyp des Motors (3) die auf diesen Bautyp bezogenen abgespeicherten Motorkenndaten zugeordnet werden können.

2. Elektromechanischer Antrieb nach Anspruch 1, zu dessen Motorerkennung ein Festwiderstand (Rx) gehört, der für jeden Bautyp des Motors (3) eine unterschiedliche fest vorgegebene Größe aufweist.

3. Elektromechanischer Antrieb nach Anspruch 2, bei dem der Festwiderstand (Rx) der Motorerkennung in der Motorleitung angeordnet ist.

4. Elektromechanischer Antrieb nach einem der Ansprüche 1 bis 3, bei dem das Universal-Steuergerät (2) als Motorendstufe eine H-Brückenschaltung (7) aufweist, die eine erste gemeinsam unterbrech- und schließbare Schaltergruppe (S1,S4) und eine zweite gemeinsam unterbrech- und schließbare Schaltergruppe (S2,S3) aufweist, die mittels einer zentralen Steuereinheit (6) des Universal-Steuergeräts (2) mit einem Tastverhältnis (Tv) = 50 % und einer Umschaltfrequenz zwischen den Schaltergruppen (S1,S4;S2,S3) von größer 10 kHz wechselweise unterbrech- und schließ- bzw. schließ- und unterbrechbar sind.

5. Elektromechanischer Antrieb nach Anspruch 4, dessen Universal-Steuergerät (2) zwischen dem Festwiderstand (Rx) und dem entsprechenden eingangsseitigen Anschluß seiner zentralen Steuereinheit (6) ein Zeitglied (8) mit einem Widerstand (Rk) und einem Kondensator (Ck) aufweist, dessen Zeitkonstante (Tk) die durch die Umschaltfrequenz zwischen den Schaltergruppen (S1,S4;S2,S3) vorgegebenen Unterbrech- bzw. Schließzeiten derselben bei weitem übersteigt.

6. Elektromechanischer Antrieb nach einem der Ansprüche 1 bis 5, dessen Universal-Steuergerät (2) und Motor (3) mittels Steckern (4,5) miteinander verbindbar sind.

Fig 1